# EUROPEAN PATENT APPLICATION

(11) **EP 3 549 651 A1**
(43) Date of publication of application: **09.10.2019**
(21) Application number: 19167109.8
(22) Date of filing: 03.04.2019
(51) Int. Cl.: B01D 21/00, B01D 21/26, B03C 1/28

(54) **SELF-DRIVEN CENTRIFUGAL SEPARATOR**

(30) Priority: 05.04.2018 IT 201800004225
(71) Applicant: Mut Meccanica Tovo S.p.A., 36075 Montecchio Maggiore (VI) (IT)
(72) Inventor: TOVO, Lino, 36075 MONTECCHIO MAGGIORE (VI) (IT)
(74) Representative: Bonini, Ercole

(57) **Abstract**

Separator (1) of impurities present in a fluid circulating in a system, comprising a container (2) that extends according to a longitudinal direction (Y) and in which the following are defined: an inlet (3) of the entering fluid (Fe) to be filtered and an outlet (4) of the filtered fluid (Fu), a sedimentation chamber (5) of the impurities, a separation chamber (6) of the impurities arranged coaxially according to the longitudinal direction (Y) above the sedimentation chamber (5) and communicating with the inlet (3) and with the sedimentation chamber (5), a filtering group (7) housed in such a separation chamber (6) and provided with through openings for the passage of the entering fluid (Fe) from the separation chamber (6) to the sedimentation chamber (5), and a duct (7a) defined inside the filtering group (7) that places the sedimentation chamber (5) in communication with the outlet (4), in which the filtering group (7) comprises at least one finned group (70) adapted for being set in rotation when it is hit by the flow of the fluid (Fe) entering from the inlet (3).

## Description

The invention concerns a hydraulic separator of impurities and of polluting particles present in a fluid circulating in hydraulic systems of various kinds. The main function of hydraulic separators is to separate the impurities circulating in hydraulic circuits, in heating systems, in fluid distribution systems and similar.

Such impurities mainly consist of ferrous and sand-type particles that form through the corrosion or mechanical degradation of the members of the system during normal operation thereof.

Such polluting particles of various kinds must be separated from the fluid to ensure optimal operation of the hydraulic circuit because, if they remain in circulation, they can cause wearing and compromise the functionality of the members of the system, particularly of those that comprise moving parts.

For example, it is known that the deposit of polluting particles can lead to scratching of the cylinders or of the stems of the actuators, blocking of the taps and valves and damage of the pumps.

Therefore, suitable separators of impurities from the circulating fluid are inserted in the systems, said separators generally comprising a container provided with an inlet of the fluid to be filtered and with an outlet of the filtered fluid and with a filtering device which tends to divert and slow down the flow of the fluid promoting the falling of the particles dispersed in the liquid towards a sedimentation chamber, equipped on the bottom with an impurity discharge path.

Usually, the separators of the prior art also comprise magnetic means that hold ferrous particles.

A known separator of impurities is described in patent document GB2491361 to Neil Johnson and comprises a container where an inlet and an outlet of the fluid circulating in a system are defined and a separation chamber of the aforementioned impurities.

The separator also comprises a magnetic device that holds the ferromagnetic particles and a reticular plate for the removal of the impurities that is also equipped with a central duct that allows the fluid to pass from the inlet to the separation chamber.

The geometric configuration of such a separator provides that the entering "dirty" fluid to be filtered passes inside the central duct of the aforementioned reticular plate to reach the separation chamber where there is a magnetic device arranged parallel to the direction of the flow, which attracts the ferromagnetic particles present in the fluid to it.

Finally, the fluid, in order to reach the outlet and be introduced back into the system, must forcibly cross the grid of the reticular plate, where the impurities are substantially deposited.

Such a device, however, has various drawbacks.

A first drawback is represented by the geometric configuration of the filtering device that does not promote the orientation of the flow towards the separation chamber and causes an accumulation of larger particles in certain areas of the container that, over time, causes a low separation capability of the reticular plate and of the magnetic element.

Indeed, part of the outlet path of the fluid is shared with the path of the entering fluid and this characteristic causes disadvantageous modifications of the motion of the fluid itself and the possibility of part of the entering fluid being transported towards the outlet and thus to the hydraulic system, before reaching the magnetic element, and thus before the ferromagnetic particles have been separated from it.

A further drawback consists of the arrangement of the reticular plate inside the container that, being positioned at the outlet of the separation chamber, prevents the fluid from staying on the grid for a sufficient time to exert an optimal separation action of the impurities present.

In order to avoid this last drawback, separators are known that provide for the use of reticular devices that extend along most of the main extension axis of the container, like for example the separator described in document EP2758178.

Disadvantageously, the spatial arrangement of such a reticular device does not allow an optimal separation of the polluting particles, which are isolated mainly through the mechanical impact thereof on the meshes of the grid.

Another drawback of the quoted separators is represented by the contamination of the exiting "cleaned" fluid with the entering "dirty" fluid. Indeed, in such known separators, the fluid must necessarily cross the reticular filtering device in order to be able to exit, with the drawback of putting possible accumulations of impurities present on the meshes of the grid back into suspension due to the prolonged use of the separator itself.

Such resuspended impurities are then conveyed towards the hydraulic system, causing the drawbacks quoted earlier.

Such a drawback can also be found in the hydraulic separator described in document JPH06226142, in which the outlet of the fluid is arranged on the bottom of the sedimentation chamber.

Further known hydraulic separators are proposed in documents US6238331, US2006096933 and WO2017168175.

Specifically, US6238331 describes a separator of impurities present in the lubricant of a motor, the separation chamber of which has a funnel structure equipped with ribs such that the liquid that enters the separation chamber is directed radially along the inclined surface of the funnel, creating vortices that carry out the separation of the particulates and their arrangement on the side surface of the container.

The separator described in document US2006096933 comprises a drum configured to separate high-density impurities from the fluid exiting the separator.

Finally, document WO2017168175 proposes a hydraulic separator provided with a long duct mounted on a support structure, the configuration and manufacture of which are particularly complex.

The present invention intends to overcome all of the indicated limitations and drawbacks.

In particular, a purpose of the invention is to make a separator of impurities that makes it possible to obtain a separation of the polluting particles present in a fluid, better than that which can be obtained with known separators.

Another purpose of the invention is to make a separator of impurities capable of improving the orientation of the entering flow and of increasing the cyclonic motion thereof towards the separation and sedimentation chamber, with respect to separators of the prior art.

A further purpose of the invention is to make a separator of impurities in which the risk of contamination between entering fluid and filtered exiting fluid is overcome.

Yet another purpose of the invention is to make a separator of impurities that allows an optimal separation of particles with ferromagnetic characteristics. The last but not least purpose is for the separator of impurities of the invention to be easy to mount, dismount and clean.

Said purposes are accomplished by making a separator of impurities present in a fluid circulating in a system, in accordance with the main claim to which reference is made.

Further characteristics of the separator of impurities are described in the dependent claims.

The aforementioned purposes, together with the advantages that will be mentioned hereinafter, will be highlighted better during the description of some preferred embodiments of the invention that are given, for indicating but not limiting purposes, with reference to the attached tables of drawings, where:
- figure 1 represents an assembled axonometric view of the separator of impurities of the invention;
- figure 2 represents an exploded axonometric view of a first preferred embodiment of the separator of the invention;
- figure 3 represents an assembled longitudinal section of the separator of the invention of figure 2;
- figure 4 represents an exploded axonometric view of a second embodiment of the separator of the invention;
- figure 5 represents an assembled longitudinal section of the separator of the invention of figure 4;
- figure 6 shows an axonometric view of the rotating body of the finned group of the invention;
- figure 7 shows an axonometric view of a reticular plate of the invention;
- figures 8 and 8a respectively show an axonometric view of the filtering group of the invention according to the first embodiment of the invention and a longitudinal section thereof.

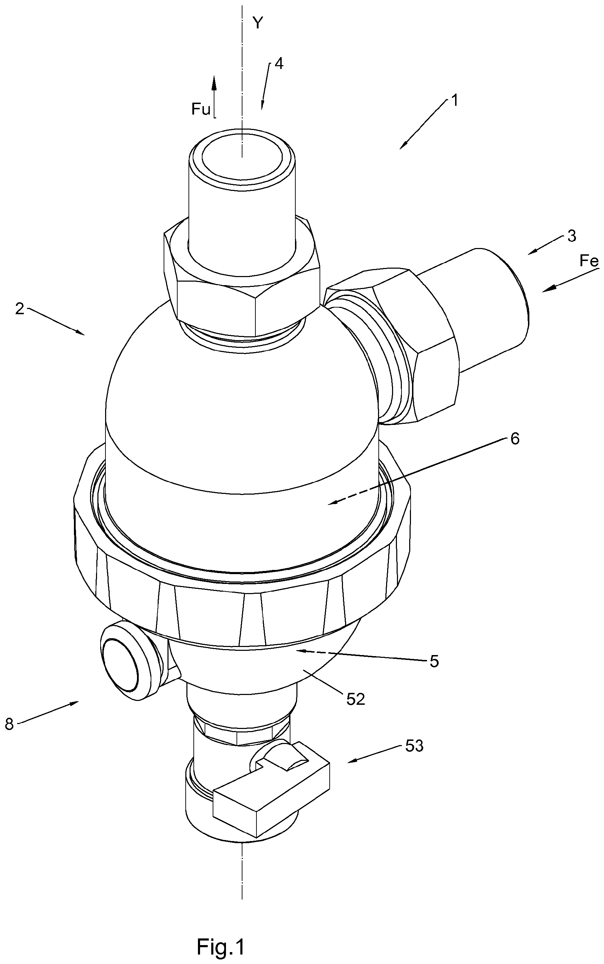

The separator of impurities object of the invention is represented in figure 1 where it is wholly indicated with **1.**

It is used to separate impurities and polluting particles that are present in the fluids of hydraulic circuits of various kinds and, as observed in the aforementioned figure 1, comprises a container **2** that extends according to a longitudinal direction **Y** and in which an inlet **3** of the entering fluid **Fe** to be filtered, and an outlet **4** of the filtered fluid **Fu** are defined. A sedimentation chamber **5** of the impurities, preferably provided on the bottom **52** with a discharge path in which there is a shut-off tap **53,** and a separation chamber **6** of the impurities are defined inside the container **2.**

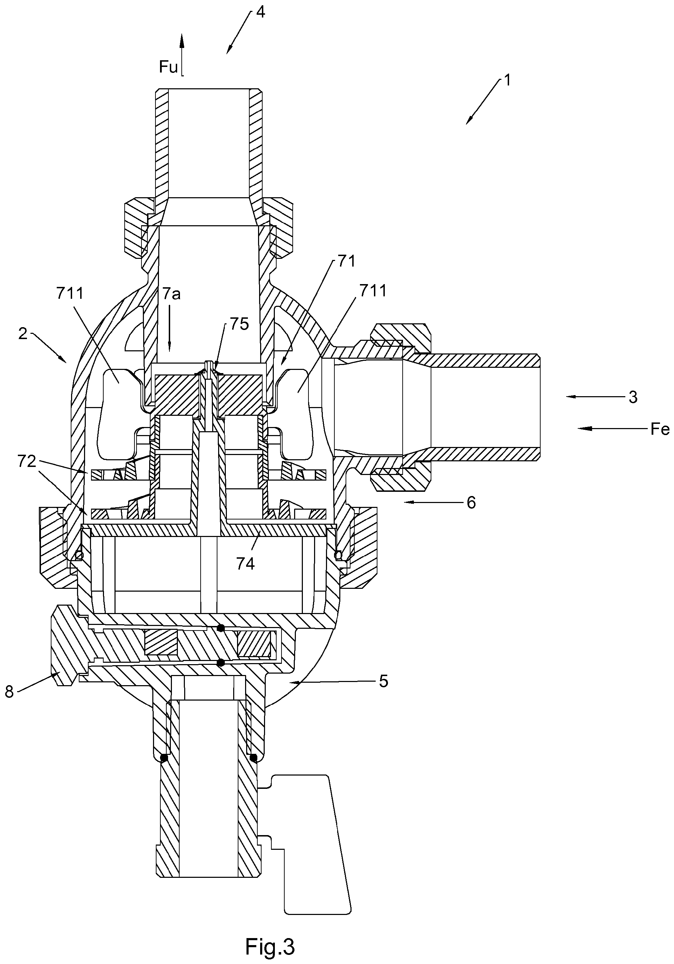

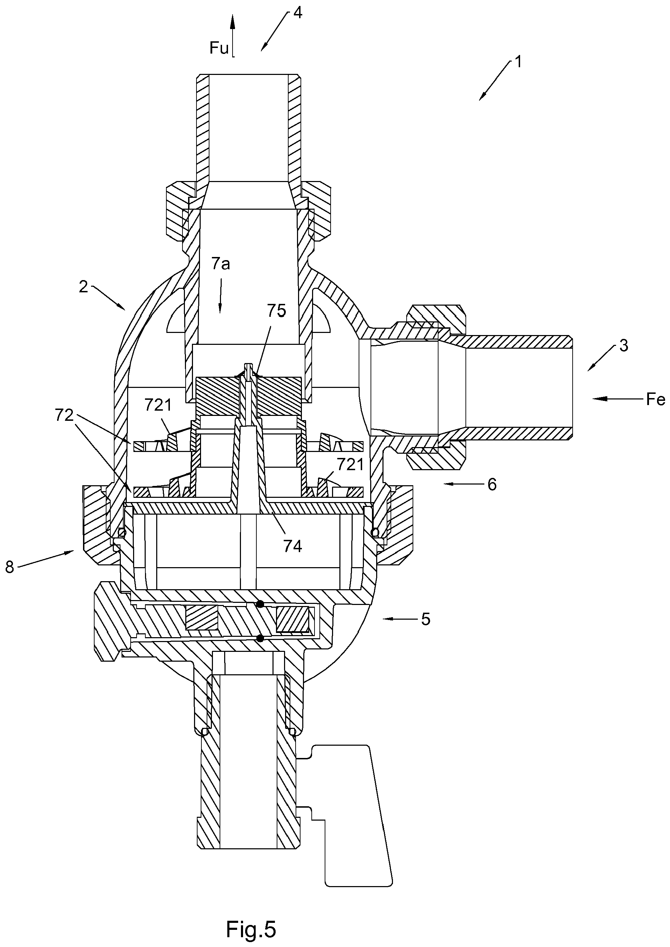

In particular, as can be seen in figures 3 and 5, the separation chamber **6** is arranged coaxially above the sedimentation chamber **5** according to the longitudinal direction of extension **Y** of the container **2** and communicates both with the inlet **3** and with the aforementioned sedimentation chamber **5.** Advantageously, the arrangement of the sedimentation chamber **5** in the low part of the separator **1** allows the accumulation of the polluting particles at a suitable distance from the inlet **3** and from a filtering group **7**, that will be described hereinafter, so that the impurities collected are not affected by the motion of the flow of the entering fluid **Fe.**

Again advantageously, such a sedimentation chamber **5** can easily be inspected through the discharge path for the possible maintenance of the internal elements in the case of blockage.

In a particularly advantageous manner, the inlet **3** directly communicates with the separation chamber **6** and has a passage section of the fluid that is smaller with respect to the section of the aforementioned separation chamber **6.**

In this way, in passing in the chamber having a larger section the speed of the fluid **Fe** to be filtered decreases and, consequently, the drag effect of the impurities suspended in it reduces.

In this way, the separation by gravity of the polluting particles contained in the entering fluid **Fe** is promoted.

The separator **1** of the invention also comprises a filtering group **7** housed in the separation chamber **6** and provided with through openings that allow the passage of the fluid **Fe** from the separation chamber **6** to the underlying sedimentation chamber **5.** Moreover, inside the filtering group **7** a duct **7a** is defined that puts the aforementioned sedimentation chamber **5** in communication with the outlet **4** of the filtered fluid **Fu.**

Such a particularly advantageous characteristic will be described in greater detail hereinafter.

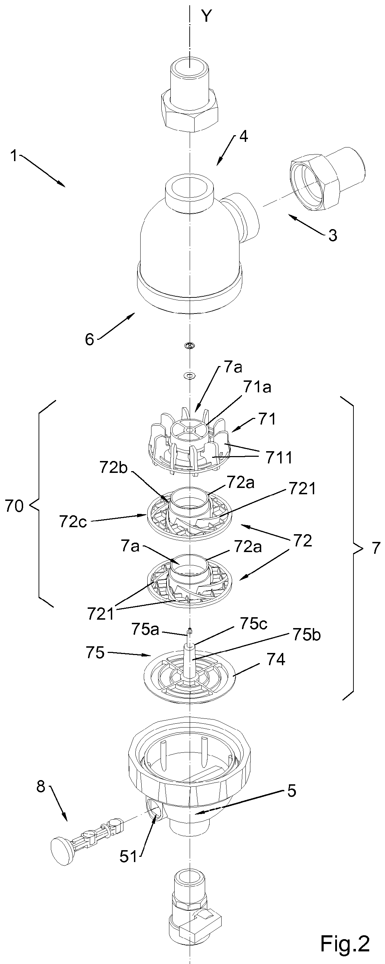

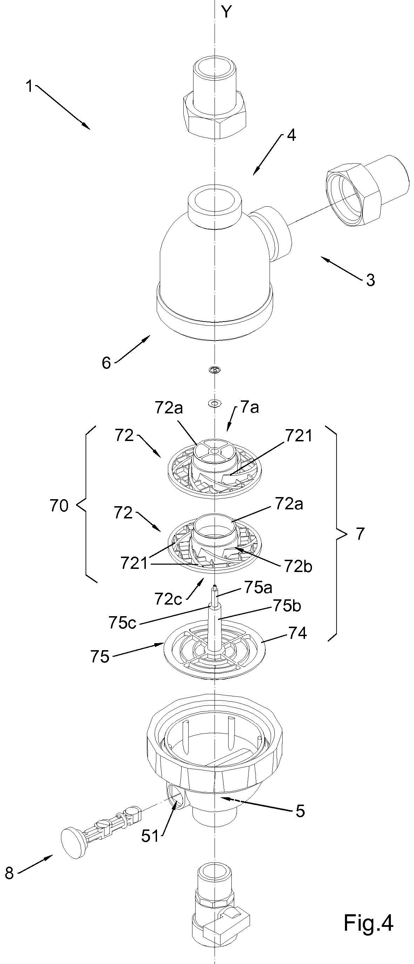

As shown in figures 2 and 4, the aforementioned filtering group **7** comprises at least one finned group **70** adapted for being set in rotation when it is hit by the flow of the fluid **Fe** entering from the inlet **3.**

Advantageously, the rotation of the finned group **70**, exploiting centrifugal force, promotes the separation of the impurities from the fluid **Fe** to be filtered and increases the cyclonic motion thereof.

In particular, thanks to the specific configuration of the separator of the invention, the flow of the fluid **Fe** to be filtered enters tangentially into the upper part of the separation chamber **6** and strikes against the finned group **70** that is set in rotation.

The solid particles present in the stream, following the centrifugal force, tend to adhere to the inner walls of the container **2** thus reducing their speed and promoting the decanting thereof on the bottom.

The rotational motion of the fluid **Fe** induced by the rotation of the finned group **70** makes it possible to obtain high efficiencies of separation of the impurities, irrespective of the average size thereof.

According to the first preferred embodiment of the invention, represented as an example in figures 2 and 3, the finned group **70** comprises at least one rotating body **71** provided with a blade assembly **711** having substantially radial extension and configured to set the rotating body **71** in rotation according to a rotation axis **R** when it is hit by the flow of the fluid **Fe** entering from the inlet **3.** Such a rotation axis **R** is preferably parallel to the longitudinal direction **Y** of extension of the container **2**, so that during the rotation, advantageously, the impurities suspended in the fluid **Fe** are directed by centrifugal force towards the inner wall of the container **2** with which they come into contact, reducing their speed, as stated earlier.

As far as the blade assembly **711** is concerned, it comprises a plurality of blades having substantially radial extension that have one end associated with the central part of the rotating body **71** and the other end fixed to a ring concentric with the rotating body **71** itself.

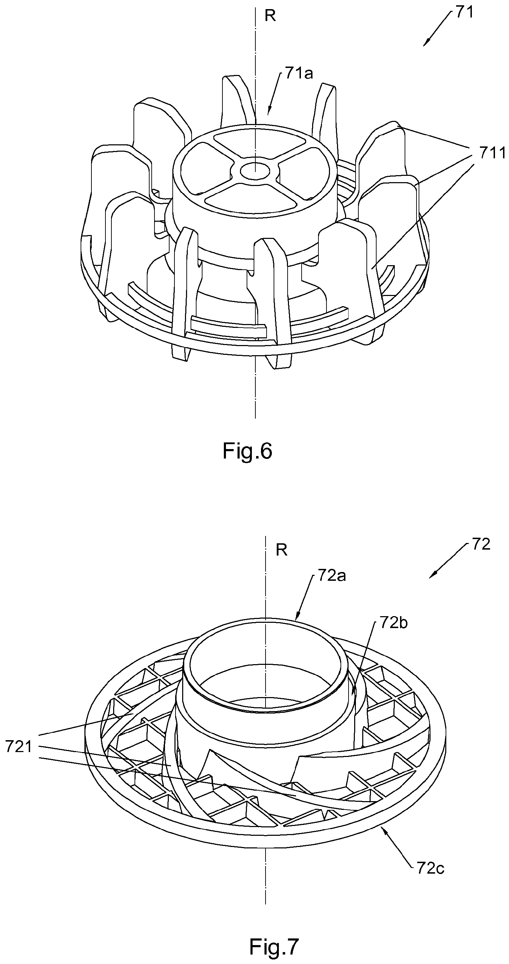

This ensures greater rigidity of the blades and thus greater efficiency of rotation since it avoids the flexing of the blades under the action of the flow of the fluid **Fe** and thus allows the finned group **70** to rotate at higher speeds, as shown in detail in figure 6.

However, this does not rule out the possibility that in alternative embodiments of the invention such blades are not fixed externally to a ring.

Blades suitable for being used in the rotating body **71** of the present invention comprise blades having curved or rectilinear profile.

For the sake of simplicity of construction, the present invention represents the blades having rectilinear extension.

In order to further improve the efficiency of separation of the impurities, the filtering group **7** comprises at least one reticular plate **72** provided with fin assemblies **721** that extend radially according to a curved profile and with increasing height from the outer edge **72c** to the inner edge **72b** of the reticular plate **72**, as represented in figure 7.

Such a reticular plate **72**, which is preferably substantially disc-shaped, is configured so as to allow the passage of the fluid **Fe** through it and slow down the impurities suspended in it.

The perimeter of the reticular plate **72** could be of any shape.

The geometric configuration of the reticular plate **72** advantageously allows the entering fluid **Fe** to mechanically impact on the meshes of the grid, slowing down the motion thereof and promoting the falling by gravity of the impurities suspended in it towards the sedimentation chamber **5.** Moreover, the configuration of the fin assemblies **721** promotes the establishment of a cyclonic motion of the fluid **Fe** that simultaneously impacts towards the inner wall of the separation chamber **6** and is conveyed towards the sedimentation chamber **5** where the flow of the fluid **Fe** becomes substantially stationary and the impurities sediment towards the bottom by gravity.

As shown in figure 7, the fin assemblies **721** extend helically, which further promotes the creation of the cyclonic motion.

However, this does not rule out the possibility that in different embodiments of the invention such extension is rectilinear.

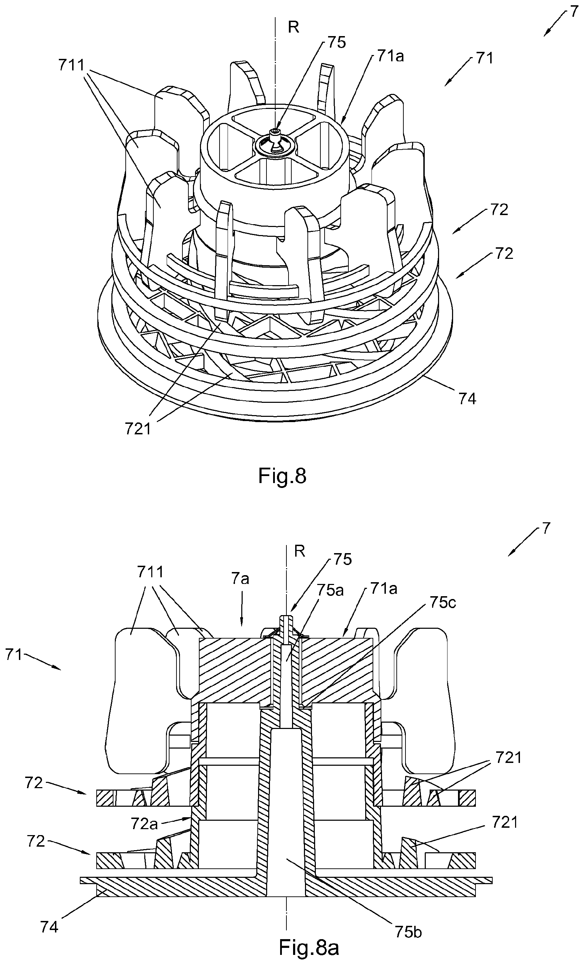

The reticular plate **72** is removably constrained with interference with the rotating body **71** so as to rotate as a unit with it when the entering fluid **Fe** passes from the inlet **3** to the sedimentation chamber **5**, but according to other embodiments the reticular plate **72** can be removably constrained by without interference and thus in a free manner with the rotating body **71** so as to remain stationary or not be pulled in rotation when the rotating body **71** rotates. In the separator **1** there are two reticular plates **72** juxtaposed according to planes substantially parallel to one another, as shown in figure 3, and, preferably, they are configured to be able to be removably constrained with one another and with the rotating body **71**, as shown in figures 8 and 8a, and rotate as a unit with it when the entering fluid **Fe** passes from the inlet **3** to the sedimentation chamber **5.**

The finned group **70** is rotatably supported by a rotation pin **75** which projects from a plate **74**, which is removably constrained inside the container **2**, and extends inside the duct **7a** according to the longitudinal direction **Y.**

The rotation pin **75** is preferably formed from at least two tubular bodies juxtaposed according to the longitudinal direction **Y** and having different diameters from one another.

In particular, the upper tubular body **75a** has a smaller diameter with respect to the diameter of the lower tubular body **75b.**

In this way, between the two tubular bodies **75a** and **75b** an annular abutment **75c** is defined that allows the finned group **70** to be stopped by interference at a distance from the plate **74** adapted for allowing the rotation of the aforementioned finned group **70**, as shown in figures 2 and 3.

In particular, the aforementioned duct **7a** is defined by a tubular body **71a** of the rotating body **71** and by a tubular body **72a** of the reticular plate **72** belonging to the finned group **70** in central position and allows the passage of the filtered fluid **Fu** from the sedimentation chamber **5** to the outlet **4.**

In detail, such a duct **7a** has one end facing the sedimentation chamber **5** and the other end connected to the outlet **4** to ensure the seal with respect to the separation chamber **6**, thus achieving one of the purposes of the present invention.

Indeed, advantageously, the fluid **Fu** filtered by the filtering group **7** present in the sedimentation chamber **5** can reach the outlet **4** passing exclusively inside the duct **7a**, and therefore without going back into contact with the meshes of the grid of the reticular plates **72**, with the blade assembly **711** of the rotating body **71** and, furthermore, without making contact with the inner wall of the container **2** arranged in the separation chamber **6.**

In this way the risk of the entering fluid to be filtered contaminating the exiting "clean" fluid is overcome, and the risk of the polluting particles being brought back into suspension and being conveyed towards the system is avoided.

In order to allow an optimal separation also of the impurities with magnetic characteristics, like for example ferrous particles, the separator **1** comprises a magnetic separator **8** that is preferably immersed in the sedimentation chamber **5**, as shown in the section of figure 3, and thus with its longitudinal axis substantially perpendicular to the longitudinal direction **Y.**

This arrangement makes it possible to obtain a better distribution of the magnetic flux in the entire section of the sedimentation chamber **5** that promotes the separation of the ferromagnetic particles in stationary flow conditions.

In particular, the aforementioned magnetic separator **8** is contained in a housing **51**, that separates it from the contact with the fluid present in the sedimentation chamber **5.**

The magnetic separator **8** is thus accessible from the outside of the container **2** and such a particularly advantageous characteristic makes it possible to speed up the maintenance and cleaning operations of the separator that can be carried out by simply extracting the magnetic separator **8** from the housing **51**, which therefore frees the magnetic particles that will decant together with the other impurities on the bottom **52** and are taken away through the shut-off tap **53.**

Again advantageously, such operations can be carried out while the system is operating.

It should be specified that, according to variant embodiments of the present invention, the magnetic separator **8** can be arranged according to *per se* known ways, for example outside of the circular surface of the separator **1** at the height of the sedimentation chamber **5**, or it may not be present.

A second embodiment of the separator of the invention, represented as an example in figures 4 and 5, differs from the first and preferred embodiment and from the possible variants thereof described earlier in that the finned group **70** comprises only a reticular plate **72** provided with fin assemblies **721** that extend radially according to a curved profile and with increasing height from the outer edge **72c** to the inner edge **72b** of the reticular plate **72**, as has already been stated for the first preferred embodiment described.

The fin assemblies **721** are configured to set the reticular plate **72** in rotation according to a rotation axis **R** when they are hit by the flow of fluid **Fe** entering from the inlet **3.**

In order to improve the separation of the polluting particles, the finned group **70** comprises two reticular plates **72** juxtaposed according to planes substantially parallel to one another and removably constrained with interference with one another to rotate as a unit when the entering fluid **Fe** passes from the inlet **3** to the sedimentation chamber **5.**

This does not rule out the possibility that, according to alternative embodiments of the invention, there are more than two reticular plates. Operatively, for both of the aforementioned embodiments of the invention, the fluid **Fe** entering into the container **2** is conveyed from the separation chamber **6** towards the sedimentation chamber **5** through the filtering group **7.**

The motion of the entering fluid **Fe** is slowed down thanks to the increase in cross section of the container **2** with respect to the section of the inlet **3** and to the mechanical impact with the fin assemblies **711**, with the meshes of the grid of the reticular plates **72** and with the fin assemblies **721**, in synergy with the cyclonic motion that is established in the container **2** through the rotation of the finned group **70** and the geometric configuration of the filtering group **7**, as shown earlier.

All of the factors listed above combine so that the impurities present in the fluid **Fe** sediment by gravity towards the bottom **52** and can be discharged. Thereafter, the filtered fluid **Fu** is conveyed towards the outlet 4 through the duct **7a.**

Advantageously, the arrangement of the duct **7a** forces the fluid to be filtered **Fe** to cross the filtering group **7** and the sedimentation chamber **5** to reach the outlet **4** and moreover the exiting fluid **Fu** cannot come into contact with the entering fluid **Fe** and be contaminated by it, thus overcoming one of the limitations of separators of the prior art.

Periodically, in order to extract the impurities sedimented on the bottom **52**, an intervention is made on the shut-off tap **53** and the discharge path beneath is opened, making a part of the fluid contained in the separator **1** come out, together with the impurities and the particles dispersed in it.

The reclosure of the tap also allows the operation of the separator to be restored.

Based on what has been stated, therefore, the separator of the invention achieves all of the predetermined purposes.

In particular, thanks to the combination of a filtering group and of rotating elements the purpose of making a separator of impurities that makes it possible to obtain a better separation of polluting particles with respect to what can be obtained with known separators is achieved.

Furthermore, thanks to the geometric configuration and to the spatial arrangement of the filtering group, the separator of the present invention improves the orientation of the entering flow and increases the cyclonic motion thereof towards the sedimentation chamber with respect to separators of the prior art.

Furthermore, the presence of the sealed duct defined inside the filtering group prevents there being contamination between entering fluid and filtered exiting fluid.

Yet another purpose of the invention that is achieved is that of making a separator of impurities that carries out an optimal separation of the particles with magnetic characteristics.

Last but not least, the separator of the invention is easy to mount and, as described earlier, the cleaning operations are easy to perform.

## Claims

1. Separator (1) of impurities present in a fluid circulating in a system, comprising a container (2) that extends according to a longitudinal direction (Y) and in which the following are defined:
- an inlet (3) of the entering fluid (Fe) to be filtered and an outlet (4) of the filtered fluid (Fu);
- a sedimentation chamber (5) of said impurities;
- a separation chamber (6) of said impurities arranged coaxially according to said longitudinal direction (Y) above said sedimentation chamber (5) and communicating with said inlet (3) and with said sedimentation chamber (5);
- a filtering group (7) housed in said separation chamber (6) and provided with through openings for the passage of said entering fluid (Fe) from said separation chamber (6) to said sedimentation chamber (5);
- a duct (7a) defined inside said filtering group (7) that places said sedimentation chamber (5) in communication with said outlet (4),
**characterised in that** said filtering group (7) comprises at least one finned group (70) adapted for being set in rotation when it is hit by the flow of said fluid (Fe) entering from said inlet (3).

2. Separator (1) according to the previous claim, **characterised in that** said finned group (70) is rotatably supported by a rotation pin (75) that extends according to said longitudinal direction (Y) inside said duct (7a), said rotation pin (75) projecting from a plate (74) constrained inside said container (2).

3. Separator (1) according to any one of the previous claims, **characterised in that** said finned group (70) comprises at least one rotating body (71) provided with a blade assembly (711) having substantially radial extension, said blade assembly (711) being configured to set said rotating body (71) in rotation according to a rotation axis (R) when it is hit by the flow of said fluid (Fe) entering from said inlet (3).

4. Separator (1) according to the previous claim, **characterised in that** said filtering group (7) comprises at least one reticular plate (72) provided with fin assemblies (721) that extend projecting radially according to a curved profile and with increasing height from the outer edge (72c) to the inner edge (72b) of said reticular plate (72).

5. Separator (1) according to claim 4, **characterised in that** it comprises two of said reticular plates (72) juxtaposed according to planes substantially parallel to one another.

6. Separator (1) according to claim 4, **characterised in that** said reticular plate (72) is removably constrained with interference to said rotating body (71) to rotate as a unit with said rotating body (71) when said entering fluid (Fe) passes from said inlet (3) to said sedimentation chamber (5).

7. Separator (1) according to claim 5, **characterised in that** said two reticular plates (72) are removably connected to one another and with the rotating body (71) with interference to rotate as a unit with said rotating body (71) when said entering fluid (Fe) passes from said inlet (3) to said sedimentation chamber (5).

8. Separator (1) according to any one of claims 1 or 2, **characterised in that** said finned group (70) comprises at least one reticular plate (72) provided with fin assemblies (721) that extend projecting radially according to a curved profile and with increasing height from the outer edge (72c) to the inner edge (72b) of said reticular plate (72), said fin assemblies (721) being configured to set said reticular plate (72) in rotation according to a rotation axis (R) when they are hit by the flow of said fluid (Fe) entering from said inlet (3).

9. Separator (1) according to claim 8, **characterised in that** it comprises two of said reticular plates (72) juxtaposed according to planes substantially parallel to one another.

10. Separator (1) according to any one of the previous claims, **characterised in that** said finned group (70) comprises said duct (7a) arranged in central position for the passage of said filtered fluid (Fu) from said sedimentation chamber (5) to said outlet (4), said duct (7a) being defined by at least one tubular body (71 a, 72a).

11. Separator (1) according to any one of the previous claims, **characterised in that** an end of said duct (7a) is connected to said outlet (4) to ensure the seal with respect to said separation chamber (6).

12. Separator (1) according to any one of the previous claims, **characterised in that** it comprises a magnetic separator (8) of impurities with magnetic characteristics immersed in the sedimentation chamber (5) and arranged in a housing (51) isolated from said sedimentation chamber (5) and accessible from the outside of said container (2) adapted for receiving said magnetic separator (8).
